# EUROPEAN PATENT SPECIFICATION

(11) **EP 1 682 344 B1**
(45) Date of publication and mention of the grant of the patent: **01.10.2008**
(21) Application number: 04798356.4
(22) Date of filing: 01.11.2004
(51) Int. Cl.: B32B 5/26, B32B 15/08, F41H 5/04

(54) **IMPROVED STRUCTURAL SANDWICH PLATE MEMBERS**
VERBESSERTE STRUKTURELLE VERBUNDPLATTENGLIEDER
ELEMENTS STRUCTURAUX PERFECTIONNES A PLAQUES EN SANDWICH

(30) Priority: 14.11.2003 GB 0326609
(43) Date of publication of application: 26.07.2006
(73) Proprietor: Intelligent Engineering (Bahamas) Limited, Nassau (BS)
(72) Inventor: KENNEDY, Stephen, John, Ottawa, Ontario K17 0N2 (CA)
(74) Representative: Leeming, John Gerard
(86) International application number: PCT/GB2004/004625
(87) International publication number: WO 2005/051649

(56) References cited:
- WO-A-02/29160
- GB-A- 1 324 898
- US-A- 5 368 914

## Description

The present invention relates to structural sandwich plate members which comprise two outer plates and a core of plastics or polymer material bonded to the outer plates with sufficient strength to substantially contribute to the structural strength of the member.

Structural sandwich plate members are described in US 5,778,813 and US 6,050,208, and comprise outer metal, e.g. steel, plates bonded together with an intermediate elastomer core, e.g. of unfoamed polyurethane. These sandwich plate systems may be used in many forms of construction to replace stiffened steel plates, formed steel plates, reinforced concrete or composite steel-concrete structures and greatly simplify the resultant structures, improving strength and structural performance (e.g. stiffness, damping characteristics) while saving weight. Further developments of these structural sandwich plate members are described in WO 01/32414. As described therein, foam forms may be incorporated in the core layer to reduce weight and transverse metal sheer plates may be added to improve stiffness.

According to the teachings of WO 01/32414 the foam forms can be either hollow or solid. Hollow forms generate a greater weight reduction and are therefore advantageous. The forms described in that document are not confined to being made of light weight foam material and can also be make of other materials such as wood or steel boxes.

International Patent Application WO 02/078948 is a further development of the concept of including hollow forms and describes forms that are easy to manufacture and assemble, in particular hollow elongate forms made from snap-together pieces are described.

The basic forms of structural sandwich plate members described in US 5,778,813 and US 6,050,208 have excellent fire resistance properties, even without structural fire protection. Unlike stiffened steel plates with external structural fire protection which may be damaged or blown free of the plate during an explosion or blast load event, the elastomer core of the structural sandwich plate member, which provides fire resistance, is internal and remains intact and functional.

Structural sandwich plate members according to US 5,778,813 and US 6,050,208 also provide greater protection against ballistics threats than conventional steel plating. For example, tests have demonstrated that a 3-30-3 structural sandwich plate member (3mm mild steel-30mm polyurethane-3mm mild steel) offers 70% greater protection against 7.62mm calibre bullets than a conventional stiffened steel plate of comparable weight. However, further improvement is still necessary to meet standards such as the US National Institute of Justice standard NIJ 0108.01.

Existing forms of armour intended to resist projectiles often comprise a combination of hard, e.g. ceramic, plates and layers of high-tensile strength fabric, e.g. Kevlar(TM) or Spectra(TM), however these arrangements are expensive to manufacture, heavy and vulnerable to damage to the plates in ordinary use of the item.

WO-A-02/29160 discloses a structural sandwich plate comprising two outer metal plates with a thickness in the range 0,5 to 25 mm, and an intermediate polymer layer which is able to transfer shear forces between said plates and has a thickness in the large 5 to 1000 mm. Metal or plastic tubes might be embedded into the intermediate layer.

It is an aim of the present invention to provide structural sandwich plate members that have improved resistance to explosions and projectiles.

According to the present invention, there is provided a structural sandwich plate member as defined in the appended claims.

The provision of an interlayer or interliner within the core provides a substantial improvement in the blast and/or projectile resistance of the plate member, much greater than would be expected merely from the addition of the extra material. Exactly what form the interlayer should take depends on the threat to be protected against.

For blast protection, an additional metal, e.g. steel or aluminium, layer of similar dimensions to the outer layers is preferred. This ensures that even if one of the outer layers is penetrated by shrapnel or completely stripped away by the force of the explosion, a sandwich structure with substantial strength and fire insulation properties remains. A solid metal plate also provides additional protection against projectiles.

For increased ballistic resistance and protection only, a more lightweight layer such as metal (e.g. steel) mesh or a high tensile strength fabric, such as Kevlar or Spectra(TM) may be employed. Such a layer obstructs or restrains any projectiles that penetrate the outer metal layer and captures any fragments of the outer metal layer or the core layer generated by the impact of the projectile. Ceramic sheets may also be used to provide ballistics and/or blast protection.

Preferably the interlayer is corrugated or dimpled. This increases the chances that the projectile engages more of the interlayer and at more favourable impact angles.

Multiple interlayers may be provided to further improve ballistics or blast resistance. If multiple corrugated or dimpled interlayers are provided, the corrugations and/or dimples in the different layers may have different orientations and/or offsets.

The materials, dimensions and general properties of the outer plates of the structural sandwich plate member of the invention may be chosen as desired for the particular use to which the structural sandwich plate member is to be put and in general may be as described in US-5,778,813 and US-6,050,208. Steel or stainless steel is commonly used in thicknesses of 0.5 to 20mm and aluminium may be used where light weight is desirable. Similarly, the plastics or polymer core may be any suitable material, for example an elastomer such as polyurethane, as described in US-5,778,813 and US-6,050,208.

Further, the invention provides a method of manufacturing a structural sandwich plate member as defined in the appended claims.

Where the interlayer is completely or significantly impervious to the uncured plastics or polymer material, the injection of the core can be carried out from both sides of the plate, either simultaneously or in two stages.

The interlayer may be coated or impregnated with plastics or polymer material prior to insertion into the cavity between the outer metal plates to give additional rigidity so that the interlayer maintains its shape and position during the injection process, e.g. where the interlayer is a high tensile strength fabric, and/or to improve bonding to the core material. If not the same as the core material, the plastics or polymer material with which the interlayer is coated or impregnated should be compatible with the core material.

The present invention will be described below with reference to exemplary embodiments and the accompanying schematic drawings, in which:
Figure 1 is a cross-sectional view of a structural sandwich plate member according to a first embodiment of the present invention;
Figure 2 is a cross-sectional view of a structural sandwich plate member according to a second embodiment of the present invention;
Figure 3 is a cross-sectional view of a structural sandwich plate member according to a third embodiment of the present invention;
Figure 4 is a cross-sectional view of a structural sandwich plate member according to a fourth embodiment of the present invention;
Figure 5 is a cross-sectional view of a structural sandwich plate member according to a fifth embodiment of the present invention; and
Figure 6 is a cross-sectional view of a structural sandwich plate member according to a sixth embodiment of the present invention;

In the various drawings, like parts are indicated by like reference numerals.

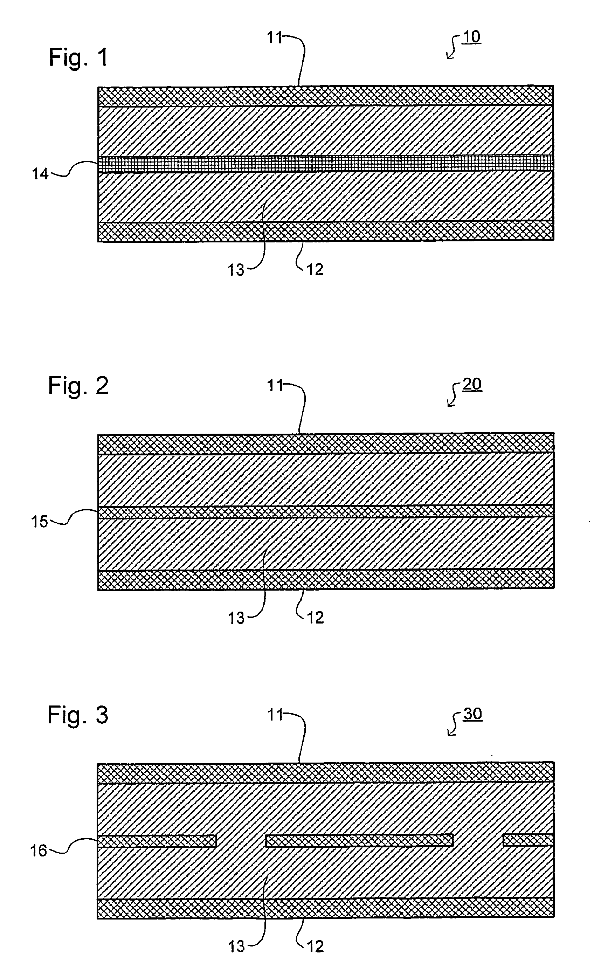

The structural sandwich plate member shown in Figure 1 comprises upper and lower outer plates (faceplates) 11, 12 which may be of steel or aluminium and have a thickness, for example, in the range of from 0.5 to 20mm. A thickness of greater than or equal to 3mm is advantageous in many applications. Edge plates are welded between the face plates 11, 12 around their outer peripheries to form a closed cavity. In the cavity between the face plates 11, 12 is a core 13 of plastics or polymer material, preferably a compact thermosetting material such as polyurethane elastomer. This core may have a thickness in the range of from 15 to 200mm; in the present application 50mm is suitable. The core 13 is bonded to the face plates 11, 12 with sufficient strength and has sufficient mechanical properties to transfer shear forces expected in use between the two face plates. The bond strength between the core 13 and face plates 11, 12 should be greater than 3MPa, preferably 6MPa, and the modulus of elasticity of the core material should be greater than 200MPa, preferably greater than 250MPa, especially if expected to be exposed to high temperatures in use. For low load applications, such as floor panels, where the typical use and occupancy loads are of the order of 1.4kPa to 7.2kPa, the bond strength may be lower, e.g. approximately 0.5MPa. By virtue of the core layer, the structural sandwich plate member has a strength and load bearing capacity of a stiffened steel plate having a substantially greater plate thickness and significant additional stiffening. The plate, of course, need not be flat but may take any form required for its intended use.

To improve the resistance of the material to ballistic projectiles, an interlayer 14 of high tensile strength fabric is provided in the core 13. As illustrated, the interlayer 14 is positioned in the middle of core 13 but this may be varied, provided a reasonable amount of core material remains either side of the interlayer. The interlayer should have a high tensile strength, for example similar to that of steel, and other properties, such as a high modulus of elasticity and high visco-elasticity, to assist in resisting projectiles, as is known. Several layers of fabric or netting may be used to provide the desired strength. The interlayer may extend throughout the sandwich plate or may be localised to those areas requiring protection. The thickness of the interlayer need not be uniform, similarly additional material may be provided where most protection is desired.

Suitable materials include fibres made of molecular chains produced from poly-paraphenylene terephthalamide (aramids), preferably as sold by E. I. du Pont de Nemours and Company under the brand name Kevlar(TM). Suitable grades include Kevlar 29, Kevlar KM2, Kevlar 129 and Kevlar 49. Also suitable are fibres made from ultra-high molecular weight polyethylene, preferably as sold by Honeywell Performance Fibres under the brand name Spectra(TM). Other suitable materials include para-aramid fibres, preferably as sold by Teijin Limited under the brand names Technora (TM) and Twaron(TM).

Where light weight is desired, the core may include lightweight forms as described in WO 01/32414. Preferably, the forms are made of fire-resistant materials as described in Copending British patent application 0306195.9 filed 18 March 2003. Particular advantages can be achieved with forms made of non-tessellating shapes as described in British patent application no 0326608.7 (Agent's ref N90171) entitled "IMPROVED STRUCTURAL SANDWICH PLATE MEMBERS WITH FORMS" filed 14 November 2003. As described therein, the forms may be made of hard materials to increase ballistics resistance and fragment capture.

To manufacture the structural sandwich plate member 10, the edge plates are welded around the periphery of lower faceplate 11 and then the interlayer 14 and spacers to hold it in place are placed in the resulting open cavity. At this stage, any precast sections of the core may be put in place as well as any shear plates or other fittings that may be desired. Then, the upper faceplate 12 is welded to the edge plates to form a closed cavity and the plastics or polymer material injected to form core 13. The injected material is then allowed to cure and the injection ports used in the injection step ground off and sealed along with the vent holes. These steps may be performed in situ, or off-site in factory conditions and the finished panel transported to the installation site.

To improve the handling of the fabric forming the interlayer, it may be coated or impregnated with a plastics of polymer material so as to be more rigid prior to insertion in the cavity. The impregnation or coating material may be the same as used to form the core material but if not should be compatible therewith, e.g. bond well to the core material. The bond strength between the core and the fabric interlayer 14 should not be less than that between the core and the faceplates 11 & 12. In some cases the fabric may have to be chemically treated to ensure sufficient bond to the core 13.

If the fabric is dense, especially if several layers are provided, so that it is not easily penetrated by the uncured core material, injection of the core material can be performed from both sides of the plate, either simultaneously or sequentially.

A second embodiment of the present invention is shown in Figure 2. The structural sandwich plate member 20 according to the second embodiment of the invention is similar to the first embodiment but different in the nature of the interlayer, as described below.

In the second embodiment, the interlayer 15 comprises a metal, e.g. steel, stainless steel or aluminium, plate, forming a multiple layered structural sandwich plate member. The metal plate is generally formed of the same material as the outer plates but need not necessarily be so. The thickness of the metal plate 15 depends on the amount of ballistic or blast protection desired and the required residual structural strength. In many cases, a metal plate acting as interlayer will have the same thickness as one of the outer metal layers but may differ from this by ±50%.

The second embodiment is manufactured in the same general way as the first embodiment save that impregnation or coating of the metal plate is not generally necessary. Instead, the metal plate is cleaned and/or pretreated in the same way as the faceplates to give equivalent bond strength to the core 13. The metal plate 15 can simply be tack welded or glued to supports to keep it in place during injection.

Figure 3 illustrates a third embodiment of the present invention which differs from the second embodiment in that the interlayer 16 is perforated. The perforations provide weight saving, enhance the bond to the core by mechanical interlock and allow the uncured core material to flow freely throughout the cavity. Suitable perforated plates may have regular patterns of holes of sizes in the range of from 3 to 20mm and density, expressed as the ratio of the total area of holes to the total plan area of the plate, in the range of from 0.25 to 0.5. Such plates are widely available. Variations on the hole pattern, size and density may be effected to enhance ballistic and blast resistance. The perforated plates may be made of hard ceramic materials as well as metals.

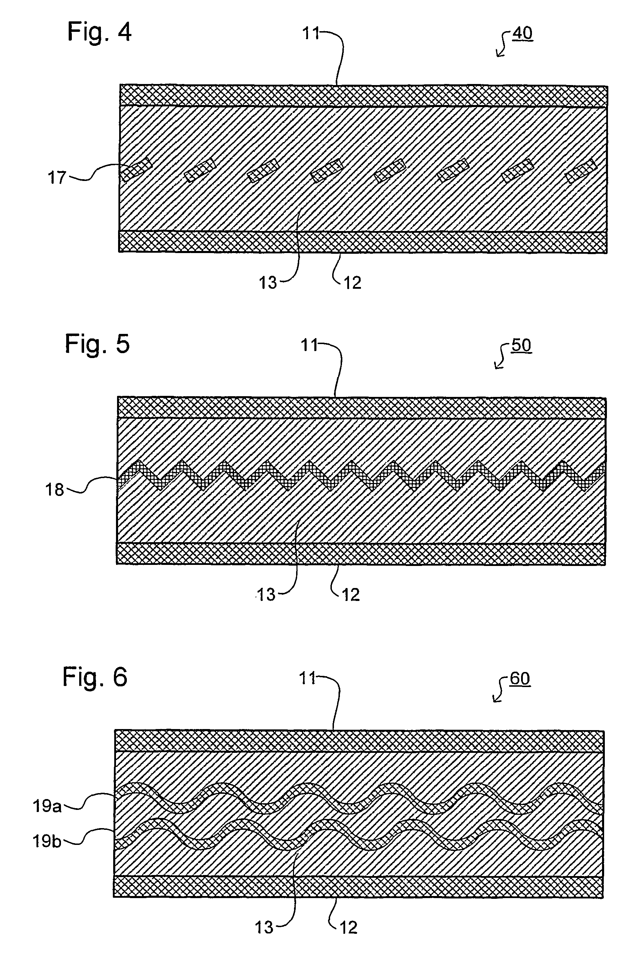

As an alternative to a perforated plate, a metal mesh may be used. This is illustrated in Figure 4 which shows a fourth embodiment of the invention. The mesh 17 not only provides the same advantages as the third embodiment but also has varying orientation of the interlayer with respect to the faceplates which provides greater ballistic resistance, in particular for bullets fired at between 45 and 90° to the plating. Expanded steel mesh such as steel mesh no 1292 manufactured by the Expanded Metal Company Limited of Hartlepool, England is suitable for use in the invention. This has a mesh size (centre-centre) of 30.48mm x 12.70mm, a strand width of 4.75mm and thickness of 2.5mm and a total open area of 25%. The mesh size, strand width and thickness and total open area may be selected as a function of the ballistic threat to be resisted and the level of resistance required.

Figure 5 shows a further variant of the first embodiment, in which the interlayer 18 has a zig-zag corrugated form. For most projectiles, this arrangement maximises the amount of material of the interlayer that the projectile contacts and ensures that projectiles that impact the outer layer perpendicularly will be incident on the inter layer at an acute angle, increasing the effective penetration strength of the interlayer. If the interlayer is of high tensile strength fabric, the zig-zag shape can be effected by impregnating the fabric with a thermosetting material in a suitably shaped mould. In the case of metal or metal mesh layers, the zig-zag shape may be applied by roll-forming or pressing.

As shown in Figure 6, as an alternative to a zig-zag shape, the interlayer may be provided with wavy corrugations. This has a similar effect and can be achieved in similar ways. Figure 6 also illustrates the use of multiple, in this case two, interlayers 19a, 19b, which may be offset from each other (as shown) or oriented perpendicular to each other. Dimpled interlayers, or sheets corrugated in two directions, may also be used.

It will be appreciated that the above description is not intended to be limiting and that other modifications and variations fall within the scope of the present invention, which is defined by the appended claims.

## Claims

1. A structural sandwich plate member comprising:
first and second outer metal plates (11,12) having a thickness of greater than or equal to 3mm; and
a core of plastics or polymer material (13) having a thickness of greater than or equal to 15mm and bonded to said outer plates with sufficient strength to transfer shear forces therebetween; **characterised by**:
at least one interlayer (14) within the core, said interlayer being generally parallel to the outer plates and having a higher tensile strength than the core material.

2. A structural sandwich plate member according to claim 1 wherein said interlayer comprises a metal, e.g. steel, stainless steel or aluminium, layer (15).

3. A structural sandwich plate member according to claim 2 wherein said interlayer (15) has a thickness in the range of from 50% to 150% of the thickness of one of said outer plates

4. A structural sandwich plate member according to claim 1 wherein said interlayer comprises metal (e.g. steel, stainless steel or aluminium) mesh (17).

5. A structural sandwich plate member according to claim 4 wherein said metal mesh (17) is formed of expanded metal.

6. A structural sandwich plate member according to claim 1 wherein said interlayer comprises a high tensile strength fabric (14).

7. A structural sandwich plate member according to claim 1 wherein said interlayer comprises a hard ceramic plate.

8. A structural sandwich plate member according to any one of the preceding claims wherein said interlayer (18, 19c, 19b) is corrugated, or dimpled or wave-formed.

9. A structural sandwich plate member according to any one of the preceding claims comprising a plurality of interlayers (19a, 19b).

10. A structural sandwich plate member according to any one of the preceding claims wherein said interlayer (16) is perforated.

11. A structural sandwich plate member according to any one of the preceding claims wherein said interlayer (14) does not extend over the whole area of said plate member.

12. A structural sandwich plate member according to any one of the preceding claims wherein said core (13) is made of a compact material.

13. A method of manufacturing a structural sandwich plate member comprising the steps of:
providing first and second outer metal plates (11,12) having a thickness of greater than or equal to 3mm in a spaced-apart relationship;
injecting uncured plastics or polymer material to fill the space defined between said outer plates and either side of said interlayer; and
allowing said plastics or polymer material to cure to form a core having a thickness of greater than or equal to 15mm which bonds said outer plates together with sufficient strength to transfer shear forces therebetween; **characterised in that**
at least one interlayer is provided between and spaced from each of said outer metal plates prior to the injection setup; and
said interlayer has a higher tensile strength than the cured plastics or polymer material.

14. A method according to claim 13 wherein said step of injecting is carried out from both sides of the plate, either simultaneously or in two stages.

15. A method according to claim 13 or 14 comprising the additional step of coating or impregnating the interlayer with plastics or polymer material prior to insertion into the cavity between the outer metal plates.

## Patentansprüche

1. Strukturelles Verbundplattenbauteil enthaltend
eine erste und zweite äußere Metallplatte (11, 12), die eine Dicke größer als oder gleich 3 mm aufweisen; und
einen Kern aus Kunststoff oder Polymermaterial (13), der eine Dicke größer als oder gleich 15 mm aufweist und mit ausreichender Kraft mit den äußeren Platten verklebt ist, dass er Scherkräfte dazwischen überträgt; **gekennzeichnet durch**
wenigstens eine Zwischenlage (14) in dem Kern, wobei die Zwischenlage hauptsächlich parallel zu den äußeren Platten ist und eine höhere Zugfestigkeit als das Kernmaterial aufweist.

2. Strukturelles Verbundplattenbauteil nach Anspruch 1, wobei die Zwischenlage eine Lage (15) aus Metall, zum Beispiel Stahl, rostfreier Stahl oder Aluminium, enthält.

3. Strukturelles Verbundplattenbauteil nach Anspruch 2, wobei die Zwischenlage (15) eine Dicke im Bereich von 50% bis 150% der Dicke einer der äußeren Platten aufweist.

4. Strukturelles Verbundplattenbauteil nach Anspruch 1, wobei die Zwischenlage ein Netz (17) aus Metall (zum Beispiel Stahl, rostfreier Stahl oder Aluminium) enthält.

5. Strukturelles Verbundplattenbauteil nach Anspruch 4, wobei das Metallnetz (17) aus gedehntem Metall geformt ist.

6. Strukturelles Verbundplattenbauteil nach Anspruch 1, wobei die Zwischenlage Fasern mit hoher Zugfestigkeit (14) enthält.

7. Strukturelles Verbundplattenbauteil nach Anspruch 1, wobei die Zwischenlage eine harte Keramikplatte enthält.

8. Strukturelles Verbundplattenbauteil nach einem der vorhergehenden Ansprüche, wobei die Zwischenlage (18, 19c, 19b) gewellt oder gewarzt oder wellenförmig ist.

9. Strukturelles Verbundplattenbauteil nach einem der vorhergehenden Ansprüche, enthaltend eine Vielzahl an Zwischenlagen (19a, 19b).

10. Strukturelles Verbundplattenbauteil nach einem der vorhergehenden Ansprüche, wobei die Zwischenlage (16) perforiert ist.

11. Strukturelles Verbundplattenbauteil nach einem der vorhergehenden Ansprüche, wobei die Zwischenlage (14) sich nicht über die gesamte Fläche des Plattenelements erstreckt.

12. Strukturelles Verbundplattenbauteil nach einem der vorhergehenden Ansprüche, wobei der Kern (13) aus einem dichten Material gefertigt ist.

13. Verfahren zum Herstellen eines strukturellen Verbundplattenbauteils enthaltend die Schritte:
Vorsehen einer ersten und zweiten äußeren Metallplatte (11, 12), die eine Dicke größer als oder gleich 3 mm in einer voneinander beabstandeten Anordnungsbeziehung aufweisen;
Einspritzen von nicht ausgehärtetem Kunststoff oder Polymermaterial zum Füllen des Raumes, der zwischen den äußeren Platten und jeder Seite der Zwischenlage definiert ist; und
Zulassen des Aushärtens des Kunststoffs oder Polymermaterials zur Bildung eines Kerns, der eine Dicke größer als oder gleich 15 mm aufweist und die äußeren Platten zum Übertragen von Scherkräften dazwischen mit ausreichender Kraft zusammenklebt; **gekennzeichnet dadurch dass**
mindestens eine Zwischenlage zwischen und beabstandet von jeder der äußeren Metallplatten vor dem Aufbau der Einspritzung vorgesehen ist; und
die Zwischenlage eine höhere Zugfestigkeit als der ausgehärtete Kunststoff oder das Polymermaterial aufweist.

14. Verfahren nach Anspruch 13, wobei der Schritt des Einspritzens von beiden Seiten der Platte, entweder simultan oder in zwei Arbeitsgängen, durchgeführt wird.

15. Verfahren nach Anspruch 13 oder 14, enthaltend den zusätzlichen Schritt des Beschichtens oder des Imprägnierens der Zwischenlage mit Kunststoff oder Polymermaterial vor der Einbringung in den Hohlraum zwischen den äußeren Metallplatten.

## Revendications

1. Elément de plaque structurelle en sandwich comprenant :
des première et deuxième plaques métalliques extérieures (11, 12) ayant une épaisseur supérieure ou égale à 3 mm ; et
une âme en matériau plastique ou polymère (13) ayant une épaisseur supérieure ou égale à 15 mm et liée auxdites plaques extérieures avec une résistance suffisante pour transférer les forces de cisaillement entre elles ; **caractérisé par** :
au moins une couche intermédiaire (14) à l'intérieur de l'âme, ladite couche intermédiaire étant de manière générale parallèle aux plaques extérieures et présentant une plus grande résistance à la traction que le matériau de l'âme.

2. Elément de plaque structurelle en sandwich selon la revendication 1, dans lequel ladite couche intermédiaire comprend une couche métallique (15), par exemple en acier, en acier inoxydable ou en aluminium.

3. Elément de plaque structurelle en sandwich selon la revendication 2, dans lequel ladite couche intermédiaire (15) a une épaisseur comprise entre 50 % et 150 % de l'épaisseur de l'une desdites plaques extérieures.

4. Elément de plaque structurelle en sandwich selon la revendication 1, dans lequel ladite couche intermédiaire comprend un treillis métallique (par exemple en acier, en acier inoxydable ou en aluminium) (17).

5. Elément de plaque structurelle en sandwich selon la revendication 4, dans lequel ledit treillis métallique (17) est formé à partir de métal déployé.

6. Elément de plaque structurelle en sandwich selon la revendication 1, dans lequel ladite couche intermédiaire comprend un tissu présentant une forte résistance à la traction.

7. Elément de plaque structurelle en sandwich selon la revendication 1, dans lequel ladite couche intermédiaire comprend une plaque en céramique dure.

8. Elément de plaque structurelle en sandwich selon l'une quelconque des revendications précédentes, dans lequel ladite couche intermédiaire (18, 19c, 19b) est ondulée, découpée ou formée en onde.

9. Elément de plaque structurelle en sandwich selon l'une quelconque des revendications précédentes comprenant une pluralité de couches intermédiaires (19a, 19b).

10. Elément de plaque structurelle en sandwich selon l'une quelconque des revendications précédentes, dans lequel ladite couche intermédiaire (16) est perforée.

11. Elément de plaque structurelle en sandwich selon l'une quelconque des revendications précédentes, dans lequel ladite couche intermédiaire (14) ne s'étend pas sur toute la surface dudit élément de plaque.

12. Elément de plaque structurelle en sandwich selon l'une quelconque des revendications précédentes, dans lequel ladite âme (13) est faite d'un matériau compact.

13. Procédé de fabrication d'un élément de plaque structurelle en sandwich comprenant les étapes dans lesquelles :
on prend des première et deuxième plaques métalliques extérieures (11, 12) ayant une épaisseur supérieure ou égale à 3 mm en relation espacée ;
on injecte un matériau plastique ou polymère non durci pour remplir l'espace défini entre lesdites plaques extérieures et chaque côté de ladite couche intermédiaire ; et
on laisse durcir ledit matériau plastique ou polymère pour former une âme ayant une épaisseur supérieure ou égale à 15 mm qui se lie auxdites plaques extérieures avec une résistance suffisante pour transférer les forces de cisaillement entre elles ; **caractérisé en ce que**
on place au moins une couche intermédiaire entre et à distance desdites plaques métalliques extérieures avant le démarrage de l'injection ; et
ladite couche intermédiaire a une résistance à la traction supérieure à celle du matériau plastique ou polymère durci.

14. Procédé selon la revendication 13, dans lequel ladite étape d'injection est exécutée depuis les deux côtés de la plaque, soit simultanément, soit en deux étapes.

15. Procédé selon la revendication 13 ou 14, comprenant l'étape supplémentaire consistant à enduire ou imprégner la couche intermédiaire de matériau plastique ou polymère avant de l'insérer dans la cavité située entre les plaques métalliques extérieures.
